(19) Europäisches Patentamt
European Patent Office
Office européen des brevets

(11) **EP 2 439 431 A1**

(12) **EUROPÄISCHE PATENTANMELDUNG**

(43) Veröffentlichungstag:
**11.04.2012 Patentblatt 2012/15**

(51) Int Cl.:
**F16J 15/16** (2006.01)          **F16J 15/32** (2006.01)

(21) Anmeldenummer: **11167275.4**

(22) Anmeldetag: **24.05.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **26.05.2010 DE 102010021600**

(71) Anmelder: **Dana Seals A/S**
**3000 Helsingor (DK)**

(72) Erfinder: **Gyllich, Per**
**3000 Helsingor (DK)**

(74) Vertreter: **Glawe, Delfs, Moll**
**Patent- und Rechtsanwälte**
**Postfach 26 01 62**
**80058 München (DE)**

Bemerkungen:
•Die Bezugnahmen auf die Zeichnung(en) Nr.5B und 6 gelten als gestrichen (R. 56(4) EPÜ).
•Ein Antrag gemäss Regel 139 EPÜ auf Berichtigung von Seite 9 der Beschreibung liegt vor. Über diesen Antrag wird im Laufe des Verfahrens vor der Prüfungsabteilung eine Entscheidung getroffen (Richtlinien für die Prüfung im EPA, A-V, 3.).

(54) **Dichtungsanordnung für Rotations-Anordnung**

(57) Eine gegen eine rotierende Achse oder einen Zylinder gerichtete Dichtungsanordnung in einer mit Flüssigkeit gefüllten Kammer, bestehend aus einem zähplastischen Kunststoffmaterial (3) und einem Aktivierungselement bestehend aus einem weicheren gummiähnlichen Element (4), zwei Ringen, die beide in einer Nut angeordnet sind und die eingebaute Kammer in der Art berühren, dass der Dichtring die rotierende Oberfläche (11) berührt, während das Aktivierungselement die übrigen Wände (8, 9) der Einbaunut abdichtet. Die rotierende Kontaktfläche (14) des Dichtrings ist in Form einer Welle (1) ausgeführt. Mindestens eine der ringförmigen Kammern (6) weist eine Verbindung zur Druckkammer (19) auf, wobei je nach Ausformung des Aktivierungselements, mithilfe des Betriebsdrucks ein Teil der Dichtungskonstruktion im Gleichgewicht gehalten wird. Höhe (18) Breite (15), Amplitude (17) und Wellenlänge (7) variieren, so dass das Fluid einen Schmierfilm auf der Gegenlauffläche (11) hinterlässt. Diese Wellen erlauben es, die Ausführungsform der Dichtung an viele verschiedene Typen rotierender Anwendungen anzupassen und gewährleisten auch unter hohem Druck und bei hohen Geschwindigkeiten in einem schlecht geschmierten Fluid eine geringe Reibung und lange Lebensdauer der Dichtung und Konstruktion.

FIG. 4 Schnitt B-B

EP 2 439 431 A1

**Beschreibung**

Eine gegen eine rotierende Achse oder einen Zylinder gerichtete Dichtungsanordnung in einer mit Flüssigkeit gefüllten Kammer, bestehend aus einem zäh-elastischen Kunststoffmaterial (3) und einem Aktivierungselement bestehend aus einem weicheren gummiähnlichen Element (4), zwei Ringen, die beide in einer Nut angeordnet sind und die eingebaute Kammer in der Art berühren, dass der Dichtring die rotierende Oberfläche (11) berührt, während das Aktivierungselement die übrigen Wände (8, 9) der Einbaunut abdichtet. Die rotierende Kontaktfläche (14) des Dichtrings ist in Form einer Welle (1) ausgeführt. Mindestens eine der ringförmigen Kammern (6) weist eine Verbindung zur Druckkammer (19) auf, wobei je nach Ausformung des Aktivierungselements, mithilfe des Betriebsdrucks ein Teil der Dichtungskonstruktion im Gleichgewicht gehalten wird. Höhe (18) Breite (15), Amplitude (17) und Wellenlänge (7) variieren, so dass das Fluid einen Schmierfilm auf der Gegenlauffläche (11) hinterlässt. Diese Wellen erlauben es, die Ausführungsform der Dichtung an viele verschiedene Typen rotierender Anwendungen anzupassen und gewährleisten auch unter hohem Druck und bei hohen Geschwindigkeiten in einem schlecht geschmierten Fluid eine geringe Reibung und lange Lebensdauer der Dichtung und Konstruktion.

Stand der Technik

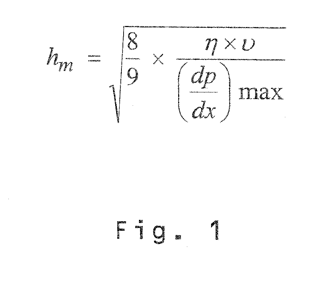

Die Erfindung betrifft eine rotierende Dichtung aus Kunststoff, z. B. sowohl aus gegossenem als auch gedrehtem Material, dadurch gekennzeichnet, dass alle Arten von Rotationsbewegungen, wie bei Drehhaken, rotierenden Wellen und Zylindern sowie schraubenförmige Bewegungen möglich sind. Als Dichtung zwischen den statischen und beweglichen Teilen werden eine Vielzahl verschiedener Ausführungsformen von Dichtungen verwendet, die spezifisch dafür ausgelegt sind, bei Druck-, Temperatur- Geschwindigkeits- und Flüssigkeitkombinationen verwendet werden zu können.
Die Erfindung betrifft die Art rotierender Dichtungen, die sich das sogenannte "Slipper Seal" Prinzip zunutze machen. Dabei ist das eigentliche Dichtelement von dem voraktivierenden Element getrennt. Das voraktivierende Element besteht in der Regel aus Gummi, kann aber auch eine Feder oder ein Hilfsdruck aus einer anderen Quelle sein. Die Funktionsweise von "Slipper Seals" besteht darin, dass das aktivierende Element vollständige Dichtheit der Anwendung im druckfreien Zustand sicherstellt, die Dichtfläche voraktiviert und einen dichtenden Pressdruck ausübt, der stets höher als der Betriebsdruck ist. Mit ansteigendem Druck steigt je nach Anwendung und Einbau auch der Anlagendruck auf die Dichtung und der Einfluss des voraktivierenden Elements wird unbedeutend, da die Aktivierungskraft des voraktivierenden Elements im Vergleich zum Betriebsdruck kleiner ist.
Rotierende Dichtungen gehören zu den anspruchsvollsten Anwendungen, da es sehr schwierig ist, bei variierendem Druck sowie variierenden Temperaturen und Geschwindigkeiten eine möglichst niedrige Reibung und einen möglichst minimalen Verschleiß sowohl für die Dichtung als auch die Welle / den Zylinder zu erreichen. Zudem richtet sich die Wahl des Materials für die Gegenlauffläche an der Welle oder dem Zylinder meist nach anderen Kriterien als nach dem Material der Dichtung. Deshalb gibt es eine Vielzahl von rotierenden Dichtungen mit großen Unterschieden sowohl in Bezug auf Preisklasse als auch in Bezug auf technische Komplexität, wobei die Bandbreite von komplexen mechanischen Wellendichtungen bis zu einfachen 0-Ringen reicht. Die Wahl der Dichtungslösung hängt deshalb in erster Linie vom Druckniveau und weiters von der Geschwindigkeit und der Betriebstemperatur ab. Der Schwierigkeitsgrad der Aufgabe für die Dichtung wird häufig mit dem von der Anwendung geforderten PV-Wert (Druck mal Temperatur) angegeben. Es besteht ein großer Bedarf an Dichtungslösungen, die zugleich so hohe PV-Werte wie möglich bewältigen und zugleich eine niedrige Reibung bei minimalem Verschleiß und niedrigen Kosten gewährleisten.
Bei sehr hohem Betriebsdruck steigt der Anlagendruck im Dichtungssystem, und die Dichtflächen der Dichtung versuchen den Schmierfilm zwischen den dynamischen Fläche herauszudrücken. Wenn der Schmierfilm $h_m$ minimiert und zwischen der Gegenlauffläche und der Dichtfläche herausgedrückt wird, wirkt sich das auf Leckagemenge, Verschleiß und Reibungseigenschaft aus. Eine Erhöhung des Drucks bedeutet höhere Reibung und Wärmeentwicklung, die zur Betriebstemperatur, bei der die Anwendung läuft, addiert werden muss. Das heißt wiederum, dass die Beanspruchung des aus Kunststoff bestehenden Dichtungsmaterials steigt, dieses aufgeweicht wird und seine Verschleißfestigkeit einbüßt. Höherer Verschleiß baut sowohl die Dichtung als auch die Gegenlaufflächen ab und dies führt dazu, dass sich Verschleißpartikel mit den Flüssigkeiten vermischen und das gesamte Flüssigkeitssystem infizieren, wodurch sich die Lebensdauer der rotierenden Anwendung verringert. Es besteht ein Bedarf nach genau solchen rotierenden Dichtungssystemen, die in der Lage sind, hinsichtlich der Steuerung der Schmierfilmdicke eine größtmögliche Variation von Druck, Temperatur und Geschwindigkeit zu bewältigen.
Aus der Dichtungstechnologie ist bekannt, dass niedrige Reibung durch einen guten Schmierfilm zwischen Dichtfläche und Gegenlauffläche erreicht wird. Der Schmierfilm darf jedoch nicht so dick sein, dass Leckage auftritt. Wenn der Schmierfilm ausreichend dicht ist, ist ein minimaler Verschleiß der Dicht- und Gegenlauffläche sichergestellt. Die Erfindung betrifft eine Anordnung, die einen optimales Schmierfilm sowie die kleinstmögliche Reibung und Leckage sicherstellt. Zur Beschreibung der Prüfung des Schmierfilms für Dichtungssysteme existiert eine umfassende Literatur, zum Beispiel in dem Buch "Untersuchung von Hydraulikstangendichtungen aus Polytetraflourethylen" von Norbert Messner, in dem unter anderem beschrieben wird, wie der Schmierfilm unter der Dichtfläche mit der Formel in Fig. 1 geprüft werden kann:

$$h_m = \sqrt{\frac{8}{9} \times \frac{\eta \times \upsilon}{\left(\dfrac{dp}{dx}\right)\max}}$$

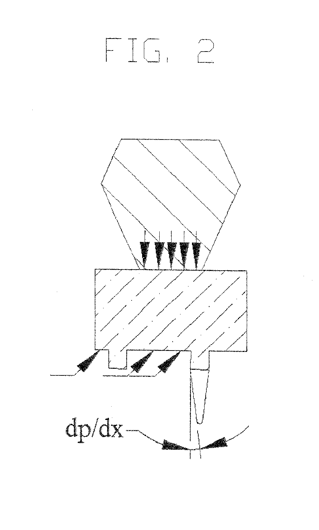

Fig. 1                                                                 Fig. 2:

Fig: 2: Aus der Formel geht hervor, dass der Schmierfilm umso dünner ist, je höher die erreichte Dichtheit $(dP/dX)_{max}$ ist. Die theoretischen Betrachtungen wurden seither in der Praxis unter anderem durch die Studie "Hauptfachpraktikum Dichtungstechnik" (HPD) auf der Grundlage von "Hydraulikdichtungen" Zeitschrift Fluid, Juli/August/Sep. 1980. nachgewiesen. Es besteht der große Wunsch, diese Praxis durch die Implementierung in Dichtungslösungen zu nutzen.

Erläuterung der Erfindung

Wie aus Fig. 4 B-B hervorgeht, ist die dynamische Dichtfläche mit wellenförmigen Dichtkanten (Wellen) ausgeführt, wobei das in Fig. 2 dargestellte primäre Aktivierungselement eine wesentliche Funktion des Dichtelements erfüllt, indem der Einfluss des Betriebsdrucks beständig zwischen hohem und niedrigem Kantendruck abwechselt, der so die Dichtungsflächen mit dem erforderlichen (kühlenden) Schmierfilm versorgt. Erfindungsgemäß wirken der Betriebsdruck und das voraktivierende Element gleichzeitig auf die schlangenförmigen Kanten, so dass der Kantendruck der primären Dichtfläche den Schmierfilm $h_m$ genau so steuert, wie in der Formel in Fig. 1 beschrieben. Je höher der Kantendruck, umso besser ist die erreicht Dichteigenschaft. Dieser Mechanismus ist unter anderem im Stepseal Patent DE2423916 (A1) beschrieben und in dem entsprechenden Konzept im Patent US 5104131, das hin- und herbewegte Anwendungen betrifft. In diesen Patenten ist die Theorie des Kantendrucks ausführlich beschrieben und macht deutlich, dass Dichtungsform und Aktivierungselement eine besondere Bedeutung für die Dichtwirkung haben.
Die Erfindung nutzt diese Praxis dadurch, dass die Zahl der wellenförmigen Kanten und deren Ausformung derart anpassbar sind, dass sie den PV-Werten, mit denen die Anwendung läuft, entspricht. Die Amplitude, Schwingungslänge, Zahl, Höhe, Breite der Wellen sowie der Abstand zwischen ihnen. Diese Parameter sind dadurch gekennzeichnet, dass jeder für sich einen Einfluss auf die vielen verschiedenen Betriebs- und Anwendungsparameter hat und auf die rotierende Anwendung genau zugeschnitten werden kann. Dies wird, dadurch erreicht, dass der Dichtring, welcher aus mindestens einer wellenförmigen Kante besteht, welche die dynamische Gegenlauffläche berührt und auf der statischen Seite von einem zwischen dem hochdruckseitigen Ende und den Flanken der Nut angebrachten Aktivierungselemen aktiviert wird. Die Welle bzw. die Wellen der Dichtflächen stellen sicher, dass unter allen Betriebsbedingungen vollständige Dichtheit gegeben ist. Der zwischen dem Aktivierungselement und dem Dichtring entstehende Kontaktdruck verteilt sich aufgrund der Elastizität des Aktivierungselements gleichmäßig auf die gesamte Fläche, die Wellenform wirkt dagegen entgegengesetzt und der Designer kann dadurch selbst bestimmen, mit welchem Flächendruck die Dichtung wirksam sein soll, wie ebenfalls aus Fig. 2 hervorgeht. Bei besonders hohem Druck kann auf der Niedrigdruckseite eine gerade Kante oder eine gesonderte Kante auf der Hochdruck- und Niedrigdruckseite vorgesehen werden, die ebenfalls wellenförmig ausgeformt sein kann, um die Fläche zu erhöhen, auf die der durch den Betriebsdruck bestimmte Anpressdruck ausgeübt wird. Indessen ist immer sichergestellt, dass der Nettopressdruck vom Dichtelement und Aktivierungselement auf die dynamische Fläche stets höher ist als der niedrigste Druck, da die Elastizitätskraft des Aktivierungselements immer auf die Kraft des Betriebsdruck, die auf das Dichtelement wirkt, addiert werden muss. Die Elastizitätskraft oder Kompression des elastischen Elements wird durch die Einbauabmessungen der Nut bestimmt, die wiederum von der Anwendung für die die Dichtungsanordnung angewendet wird, abhängt.
Unter rotierenden Anwendungen wird zwischen Anwendungen mit einfachwirkenden und doppeltwirkenden Dichtungen unterschieden. Für beide Typen von Anwendungen gibt es eine vorgezogene Ausführungsform. Bei der Ausführungsform für eine einfachwirkende Lösung besteht das Dichtelement vorzugsweise aus zwei wellenförmigen Lippen, die mit einer bestimmten Breite die Gegenlauffläche berühren. Amplitude und Wellenlänge werden vom Designer gemäß den Druck- und Geschwindigkeitsbedingungen der Anwendungen bestimmt. Je größer die Amplitude und je kürzer die Wellenlänge, desto größer die erreichte Auflagefläche. Die Auflagefläche kann auch durch die Erhöhung der Breite der Wellen erreicht werden. Die Höhe der Welle kann für den Kantendruck im Verhältnis zur Breite eingestellt werden, sodass die Deformation umso stärker ist, je höher der Druck ist, wobei in der Ausführungsform vorzugsweise kleine Abfasungen vorgesehen sind, durch die ein hoher Kantendruck aufrechterhalten wird. Bei Anwendungen, bei denen die Anwendung nur einem niedrigen Druck ausgesetzt wird, sind solche Abfasungen nicht erforderlich. In dieser Ausführungsform wird vorzugsweise ein rechteckiges oder quadratisches Aktivierungselement mit abgeschrägten Seiten verwendet, um eine bessere Stabilität des Dichtelements zu erreichen, das je nach Ausformung der Wellen ein "Umfallen" der Dichtung verhindert. Normalerweise wird die Ausführungsform vorzugsweise, wiederum abhängig von den Anwendungsparametern, von O-Ring-ähnlichen Elementen aktiviert. Die wellenförmigen Kanten verfügen in dieser Ausführungsform vorzugsweise auf der Druckseite an mehreren Stellen über Aussparungen oder Nuten (Notches), um sicherzustellen, dass der Betriebsdruck uneingeschränkten Zugang zum Zwischenraum zwischen den Wellen hat, um die Dichtung im Gleichgewicht zu halten und den zwischen Dichtung und rotierender Oberfläche entstehenden Druck auszugleichen.

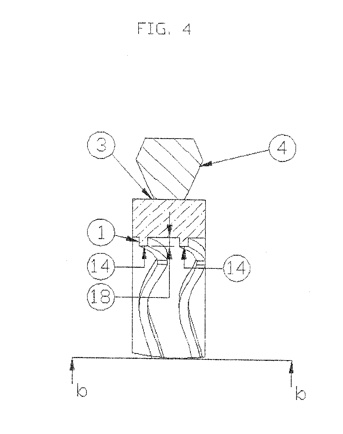

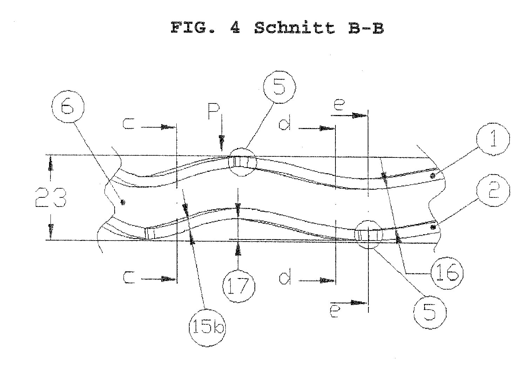

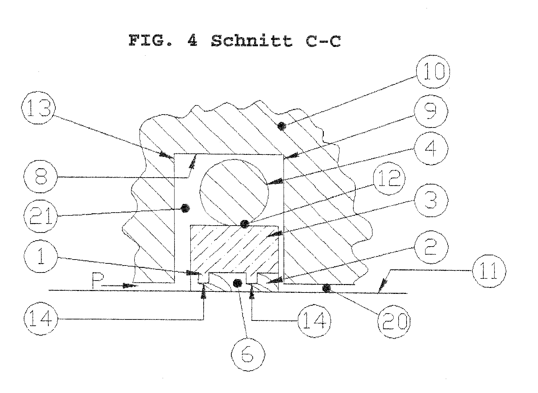

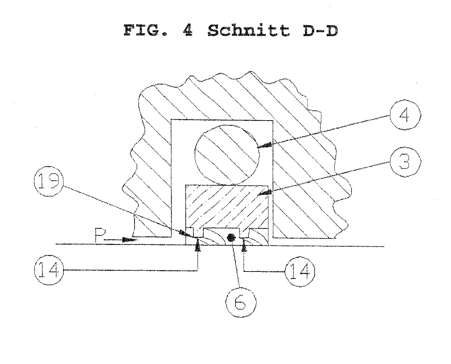

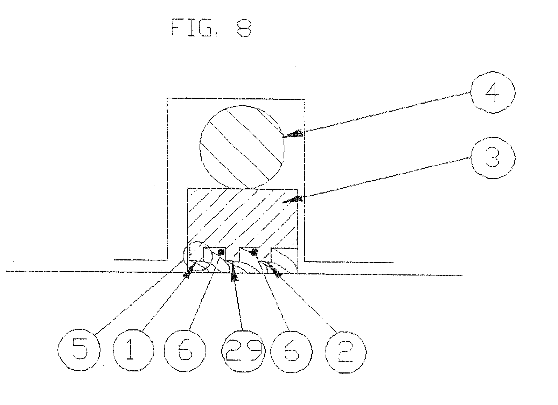

Bei der erfindungsgemäßen Ausführungsform für eine doppeltwirkende Lösung, die gemäß der Beschreibung vorzugsweise in Drehhaken mit beidseitigem Druck angewendet wird, werden vorzugsweise zwei Ausführungsformen angewendet, bei denen, wie in Fig. 4 und Fig. 8 dargestellt, zwei Flüssigkeiten bzw. zwei Drücke getrennt werden müssen.

Die in Fig. 4 gezeigte Ausführungsform wird vorteilhafter Weise ohne Aussparungen in den beiden wellenförmigen Dichtkanten (5) ausgeführt, da auf beiden Seiten in verschiedenen Konfigurationen ein symmetrischer Druck aufrecht gehalten werden muss.

Die in Fig. 8 dargestellte Ausführungsform verfügt vorzugsweise über 3 Wellen, von denen die beiden äußeren Wellen mit Aussparungen (5) versehen sind, die einen Ausgleich und eine Entlastung der Dichtung sicherstellen und auch damit sie beidseitig einbaubar ist, ohne das dies Auswirkungen auf die Funktion der Dichtung hat.

Bei beiden als doppeltwirkende Lösung angewendete Ausführungsformen kann die Wellenform individuell variiert werden und wie in den Ansprüchen beschrieben mit anderen Wellenformen kombiniert werden, um optimale Bedingungen für die Dichtfähigkeit der rotierenden Dichtung zu erreichen.

Um sicherzustellen, dass der Betriebsdruck, bei hochfrequenten Druckpulsen auch hinter die Dichtung gelangt, anstatt die Dichtung anzuheben, werden vorzugsweise alle Ausführungsformen in der Regel entlang der Dichtungsseite auch mit solchen Nuten oder Aussparungen (22) versehen. Solche senkrechte Nuten oder Aussparungen sind von vielen anderen Dichtungstypen bekannt.

Im Folgenden wird die Erfindung mit Verweisen auf die Zeichnungen detailliert beschrieben. Die Besonderheiten der jeweiligen einzeln beschriebenen Ausführungsformen, können diese in anderen individuellen Zusammenstellungen oder gewünschten Kombinationen angewendet werden.

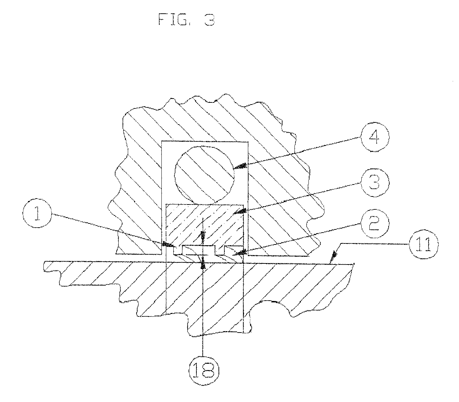

Für die Zeichnungen in Fig. 3 bis 10 gilt allgemein, dass die Anordnung aus einem Dichtring (3) und einem Aktivierungselement (4) besteht, wobei beide Teil eines zusammengebauten Systems sind, in dem die beiden Elemente (3) und (4) voneinander abhängig sind und für den Einbau in die Nut (10) vorgesehen sind, so dass die Dichtkanten (1), (2), (24), (25), (26), (27), (28) und (29) den Innenteil des Dichtelements bilden, der die ringförmige Fläche (11) berührt, die ein Zylinder oder eine Stange sein kann, der bzw. die durch den Einbau (10) verläuft, während der Aktivierungsring (4) zwischen der ringförmigen Fläche (8) und den Nutflanken (13) und der Außenfläche (12) der Dichtung angeordnet ist. Der Dichtring (3) und das Aktivierungselement (4) werden je nach Wahl des Elastizitätsmaterials zusammengeklemmt oder zusammengepresst und gegen die druckfreie Fläche (9) gepresst, wenn der Betriebsdruck auf die Dichtung wirkt. Wähnend der dynamischen Rotationsbewegung wird ein effizienter Leckageschutz sichergestellt, wobei der Designer durch die Wahl der Ausführungsform, vorzugsweise eine der im folgenden beschriebenen Ausführungsformen, die verschiedenen Betriebsbedingungen berücksichtigten kann. Fig. 3 zeigt einen Schnitt einer in einer Nut eingebauten Dichtungsanordnung. Fig. 4 zeigt einen Schnitt eines elastisch-plastischen Kunststoffs mit einem Aktivierungselement (4). Der Dichtungsteil ist mit zwei individuellen wellenförmigen Kanten (1) und (2) mit der Höhe (18) und der Kontaktfläche (14), die der Gegenlauffläche der Welle oder des Zylinders (11) entgegenläuft, ausgeführt.

Fig. 4 zeigt eine Dichtungsanordnung im nicht eingebauten Zustand, wobei der Schnitt b-b in Fig. 4 Schnitt B-B die dynamische Fläche der Dichtungsanordnung zeigt. Darin ist die Form der Welle (1) und (2) mit einer bestimmten Amplitude (17) und einer Wellenlänge (7) dargestellt. Die Wellen (1) und (2) bzw. (15a) und (15b) weisen in der Regel die gleiche Breite auf, können aber auch verschiedene Breiten haben. Die Breite der Dichtung (23) variiert entsprechend der Anwendung und insbesondere dem Durchmesser der Anwendung. Der Abstand (16) zwischen den Wellen (1) und (2) kann ebenfalls variieren. Auf der dem Betriebsdruck zugewandten Seite ist die Dichtung zur Druckentlastung, wie in Fig. 5b dargestellt, mit Nuten oder Aussparungen (5) ausgeführt.

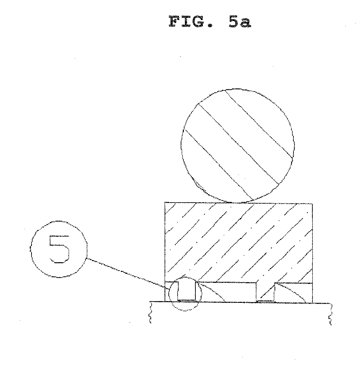

Fig. 4 Schnitt C-C zeigt einen typischen Einbauzustand (10), mit einem Medium (21), bei dem das Aktivierungselement (4) statisch an den Nutflanken (8), (9) und (13) und gegen die Dichtfläche (12) dichtet, um sicherzustellen, dass die Reibung im Bereich (12) stets größer ist als die Reibung zwischen (11) und den Punkten (14). Der Hohlraum (6) kann wie in Fig. 5a gezeigt durch die Aussparung (5) mit der Druckseite (21) verbunden werden. Schnitt C-C zeigt die Dichtung, wenn die Welle der Druckseite am nächsten ist. Der Schnitt der Fig. 4 D-D zeigt die gleiche Dichtung, wenn die Welle am weitesten von der Druckseite entfernt ist, wo aber die Abfasung (19) gezeigt wird.

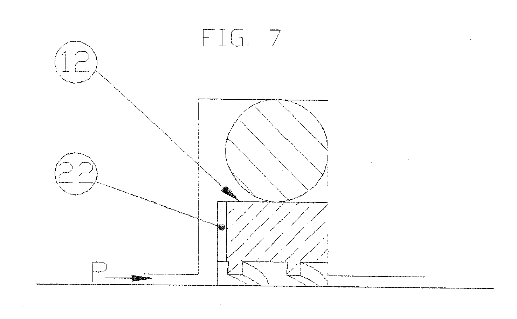

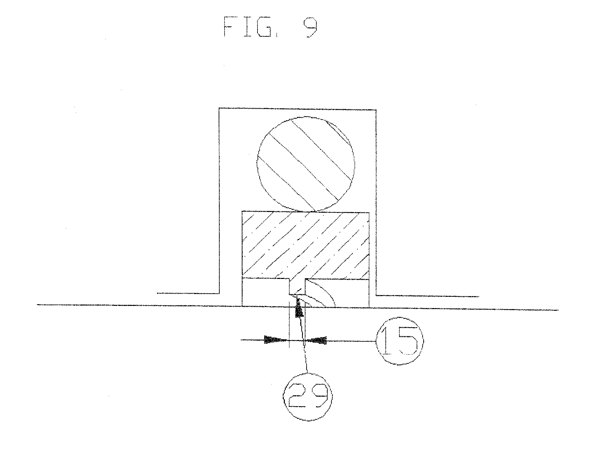

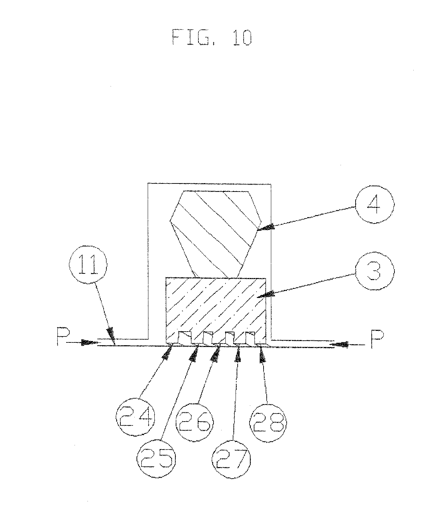

In Fig. 7 ist die Dichtungsanordnung mit einer senkrechten Aussparung (22) gezeigt, die sicherstellt, dass der Betriebsdruck, der durch hochfrequente Pulsationen die Rückseite (12) der Dichtungsanordnung aktivieren kann. Fig. 8 zeigt eine Ausführungsform einer doppeltwirkenden Dichtung, bei des von beiden Seiten ein voneinander unabhängiger Druck wirken kann. Die mittlere Welle (29) trennt die Dichtung in zwei Teile, wobei die Dichtung auf jeder Seite entlastet wird, indem die Wellen (1) und (2) mit lateralen Aussparungen (5) ausgeführt sind, wodurch sichergestellt wird, dass in den Hohlraum (6) Fluid dringen kann und damit für Entlastung sorgt. Fig. 9 zeigt eine Ausführungsform, bei der die Welle mit einer Amplitude ausgeführt werden kann, die der Breite der Dichtung (23) minus der Breite der Welle (15) entspricht. Fig. 10 zeigt eine Ausführungsform, in der jede einzelne Welle (24), (25), (26), (27), (28) individuell entweder als Welle oder als Kombination von Wellen oder als Welle mit der Amplitude 0 ausgeführt ist.

Zusammenfassung der Zeichnungen

a) Um einen Großteil des Drucks unter die Dichtung zu bringen, kann die Amplitude der Wellen (17) entsprechend dem Druck, dem die Dichtung ausgesetzt werden soll, variiert werden.

b) Durch das Anbringen von Nuten (5) kann ein Eindringen des Drucks in die Kammer (6) zugelassen werden, wodurch ein noch größerer Gegendruck erzeugt wird. Wird die Dichtung korrekt, mit der Nutseite zur Druckseite angebracht, lässt sich der Gegendruck unter der Dichtung fast gänzlich der druckfreien Seite (20) annähern.

c) Wird die in Fig. 8 dargestellte Ausführungsform mit drei Wellen gewählt, können die beiden äußerten Wellen mit einer Nut ausgeführt werden, die sicherstellt, dass die Dichtung beidseitig einsetzbar ist.

d) Die Breite der Welle (15) ist variierbar, damit die Dichtung dem absoluten Druck, dem sie bei einem bestimmten Betriebsdruck standhalten muss, aushält. e) Die Wellenlänge (7) wird durch die Größe der Fläche, die für den Gegendruck gewünscht wird, bestimmt.

**Patentansprüche**

1. Eine Fluid-Anordnung bestehend aus einem zwei Druckbereiche voneinander trennenden Einbau, einer Öffnung der besagten Wand, in der sich eine zylindrische Oberfläche befindet, einer Einbaunut in besagter Oberfläche, einer rotierende Welle oder einem rotierenden Zylinder in besagter Öffnung, in der sich eine Dichtungsanordnung befindet, bestehend aus einem zäh-elastischen Kunststoff und einem Aktivierungelement aus einem weicheren elastamerähnlichen Element, die zu einem System zusanunengebaut, in besagter Nut einander auf eine Weise ergänzen, dass eine ihrer gemeinsamen Flächen gegen einen höheren Druck gerichtet ist und das Aktitrierungselement in abdichtender Funktion zwischen den ringförmigen Flächen, besagter Nut, und der Außenfläche des Dichtelements festgehalten wird, bei einem radialen Initialdruck von einer näher bestimmten Übergröße Aktivierungselement und der ringförmigen Fläche des Dichtrings gegen die dynamische Zylinderfläche, **dadurch gekennzeichnet, dass** die dynamische Dichtfläche der Dichtung entlang des gesamten umlaufenden Dichtungsumfangs zur Vervielfachung des dynamischen Dichtdurchmessers als Wellen ausgeführt ist, deren Amplitude im Verhältnis zur Breite der dynamischen Dichtfläche der Welle variiert und mindestens über eine Welle verfügt.

2. Dichtung nach Anspruch 1, **dadurch gekennzeichnet, dass** die individuelle Amplitude der Wellen mindestens die Hälfte der Breite der schmalsten Welle, mindestens jedoch 0,4 mm, aufweist.

3. Dichtung nach Anspruch 1 und 2, **dadurch gekennzeichnet, dass** die dynamische Fläche der Dichtung mit mehreren Wellen mit unterschiedlichen Amplituden kombiniert wird.

4. Dichtung nach Anspruch 1, **dadurch gekennzeichnet, dass** die Wellen im Wesentlichen parallel zueinander verlaufen.

5. Dichtung nach Anspruch 1 bis 4, **dadurch gekennzeichnet, dass** die Amplitude der Welle mindestens 10 % der Breite der Dichtung, vorzugsweise 25 % der Breite der Dichtung beträgt.

6. Dichtung nach Anspruch 1 bis 5, **dadurch gekennzeichnet, dass** die Breite der Welle mindestens 0,4 mm beträgt.

7. Dichtung nach Anspruch 1 bis 6, **dadurch gekennzeichnet, dass** die Höhe der Welle mindestens 0,2 mm beträgt und im Wesentlichen immer kleiner ist als die Breite der Welle.

8. Dichtung nach Anspruch 1 bis 7, **dadurch gekennzeichnet, dass** die Höhe der Welle mit 0,2 mm Abfasungen ausgeführt ist und im Wesentlichen immer weniger als 10 % der Breite der Welle beträgt.

9. Dichtung nach einem der vorhergehenden Ansprüche, **dadurch gekennzeichnet, dass** mehrere Wellen, vorzugsweise die äußerste(n) Welle (n) mit einer Nut (Notch) ausgeführt sind.

10. Dichtung nach einem der vorhergehenden Ansprüche, **dadurch gekennzeichnet, dass** die Dichtung von einem rechteckigen elastisch-plastischem Material mit abgeschrägten Seiten aktiviert wird.

11. Dichtung nach einem der vorhergehenden. Ansprüche, **dadurch gekennzeichnet, dass** die Seiten des Aktivierungselements in einem Winkel von 3° bis 15°, vorzugsweise 7°, abgeschrägt sind.

12. Dichtung nach einem der vorhergehende Ansprüche, **dadurch gekennzeichnet, dass** das Aktivierungselement der Dichtung ringförmig oder als Vieleck, vorzugsweise als O-Ring, ausgeführt ist.

13. Dichtung nach Anspruch 1, 2 und 3, **dadurch gekennzeichnet, dass** mindestens eine der Wellen der Dichtung eine Amplitude von 0 aufweist.

$$h_m = \sqrt{\frac{8}{9} \times \frac{\eta \times \upsilon}{\left(\frac{dp}{dx}\right) \mathrm{max}}}$$

Fig. 1

FIG. 2

dp/dx

FIG. 3

FIG. 4

FIG. 4 Schnitt B-B

FIG. 4 Schnitt C-C

FIG. 4 Schnitt D-D

FIG. 5a

FIG. 7

FIG. 8

FIG. 9

FIG. 10

NN0071-026940-70

RR0016-2460-55-N

Sektion A-A
Verhältnis 2 : 1

Sektion D-D
Verhältnis 1 : 1

DETAIL C
Verhältnis 2 : 1

A

A

D

D

B

C

DETAIL B
Verhältnis 5 : 1

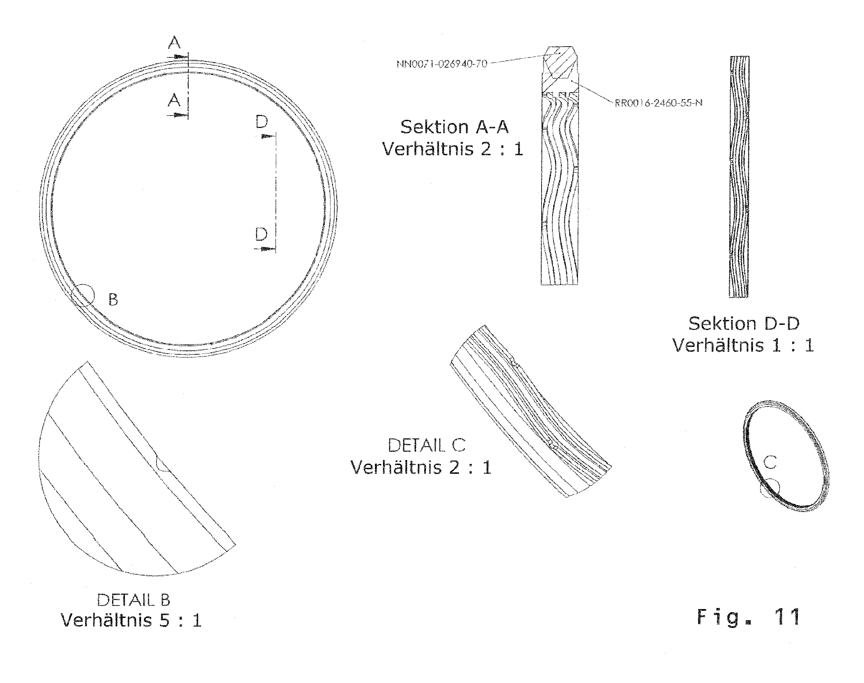

Fig. 11

NN0071-026940-70

RR0016-2460-55-N

Sektion O-O
Verhältnis 2 : 1

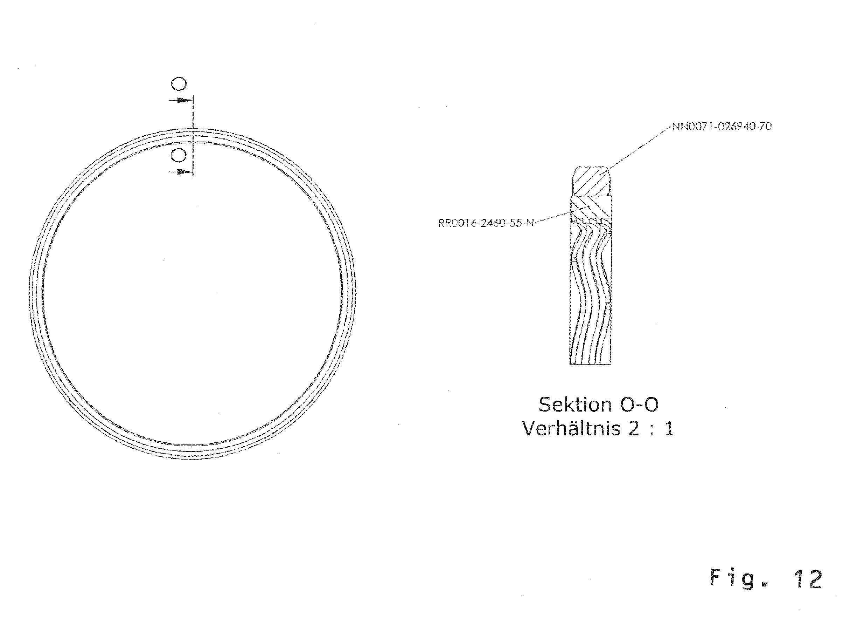

Fig. 12

DETAIL C
Verhältnis 2 : 1

DETAIL B
Verhältnis 2 : 1

8,3 ±0,1
1,2
,3
1
1,5
1,3
1

5,5 ±0,1

Ø 257,325 ±0,25

Sektion A-A
Verhältnis 1 : 2

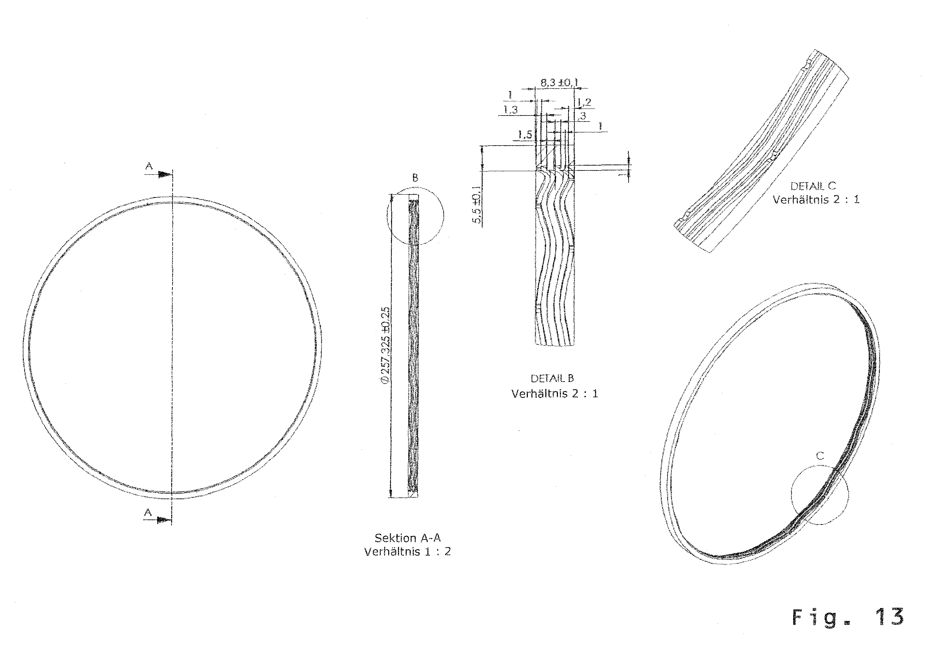

Fig. 13

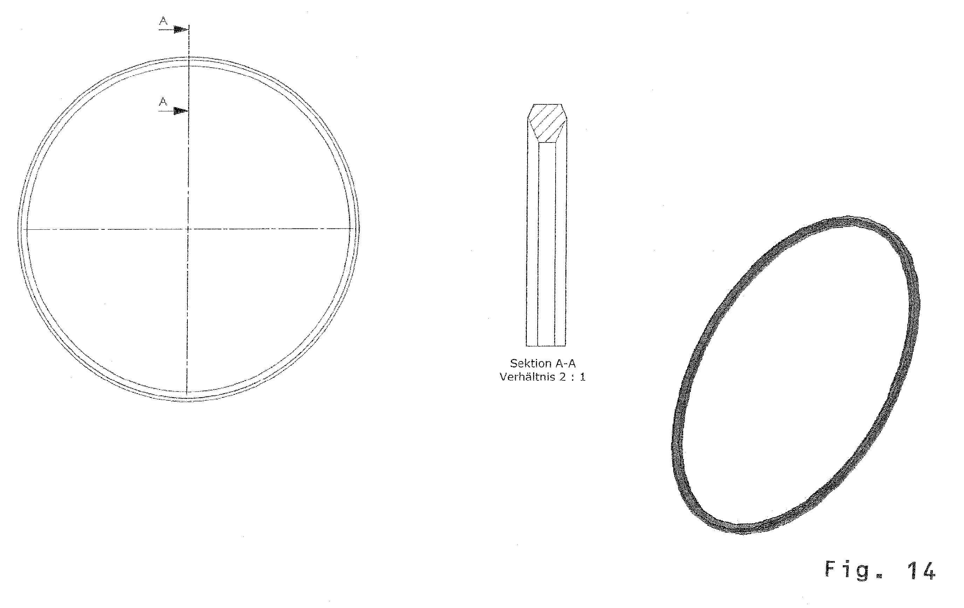

Fig. 14

Sektion A-A
Verhältnis 2 : 1

Europäisches
Patentamt

European
Patent Office

Office européen
des brevets

**EUROPÄISCHER RECHERCHENBERICHT**

Nummer der Anmeldung

EP 11 16 7275

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 23 48 739 A1 (SHAMBAN & CO W S) 12. Juni 1974 (1974-06-12) | 1,2,4-8, 12 | INV. F16J15/16 F16J15/32 |
| Y | * Abbildungen 2-6 * | 9 | |
| | ----- | | |
| X | DE 298 22 515 U1 (HUNGER DFE GMBH DICHTUNGS UND [DE]) 15. Juli 1999 (1999-07-15) * das ganze Dokument * | 1,2,5-8, 12 | |
| | ----- | | |
| X | WO 2008/126866 A1 (NOK CORP [JP]; MAEDA TOSHIYUKI [JP]; ABE YOSHIYUKI [JP]) 23. Oktober 2008 (2008-10-23) * Absatz [0089] - Absatz [0093]; Abbildung 12d * | 1,2,5-8, 12 | |
| | ----- | | |
| X | GB 531 098 A (AUTOMOTIVE PROD CO LTD; ALBERT VERE OLIVER) 30. Dezember 1940 (1940-12-30) * das ganze Dokument * | 1,2,5-8, 12 | |
| | ----- | | |
| X | EP 0 643 243 A1 (PARKER PRAEDIFA GMBH [DE] PARKER HANNIFIN GMBH [DE]) 15. März 1995 (1995-03-15) * das ganze Dokument * | 1,2,5-8, 12 | RECHERCHIERTE SACHGEBIETE (IPC) F16J |
| | ----- | | |
| Y | US 3 663 024 A (TRAUB HENRY A) 16. Mai 1972 (1972-05-16) * Spalte 6, Zeile 28 - Zeile 69; Abbildung 5 * | 9 | |
| | ----- | | |
| A | US 2005/093246 A1 (DIETLE LANNIE L [US] ET AL) 5. Mai 2005 (2005-05-05) * das ganze Dokument * | 1 | |
| | ----- | | |

Der vorliegende Recherchenbericht wurde für alle Patentansprüche erstellt

| Recherchenort | Abschlußdatum der Recherche | Prüfer |
|---|---|---|
| München | 1. März 2012 | Cipriano, Pedro |

EPO FORM 1503 03.82 (P04C03)

**EP 2 439 431 A1**

**ANHANG ZUM EUROPÄISCHEN RECHERCHENBERICHT
ÜBER DIE EUROPÄISCHE PATENTANMELDUNG NR.**

EP 11 16 7275

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-03-2012

| Im Recherchenbericht angeführtes Patentdokument | | Datum der Veröffentlichung | Mitglied(er) der Patentfamilie | | Datum der Veröffentlichung |
|---|---|---|---|---|---|
| DE 2348739 | A1 | 12-06-1974 | DE 2348739 A1 | | 12-06-1974 |
| | | | FR 2269285 A5 | | 21-11-1975 |
| | | | JP 49087945 A | | 22-08-1974 |
| DE 29822515 | U1 | 15-07-1999 | KEINE | | |
| WO 2008126866 | A1 | 23-10-2008 | CN 101657661 A | | 24-02-2010 |
| | | | DE 112008000945 T5 | | 04-02-2010 |
| | | | KR 20090132612 A | | 30-12-2009 |
| | | | US 2010133757 A1 | | 03-06-2010 |
| | | | WO 2008126866 A1 | | 23-10-2008 |
| GB 531098 | A | 30-12-1940 | KEINE | | |
| EP 0643243 | A1 | 15-03-1995 | DE 4330524 A1 | | 23-03-1995 |
| | | | EP 0643243 A1 | | 15-03-1995 |
| US 3663024 | A | 16-05-1972 | KEINE | | |
| US 2005093246 | A1 | 05-05-2005 | US 2005093246 A1 | | 05-05-2005 |
| | | | US 2011006484 A1 | | 13-01-2011 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 2423916 A1

- US 5104131 A